# EUROPEAN PATENT APPLICATION

(11) **EP 4 599 680 A1**
(43) Date of publication of application: **13.08.2025**
(21) Application number: 25154341.9
(22) Date of filing: 28.01.2025
(51) Int. Cl.: A21D 13/22, A21C 9/04, A21C 15/00, A21D 13/24, A21D 13/41, A21D 13/47

(54) **PRODUCTION METHOD OF AT LEAST ONE BAKED FOOD PRODUCT**

(30) Priority: 06.02.2024 IT 202400002398
(71) Applicant: Carbone, Arnaldo, 00167 Roma (IT)
(72) Inventor: Carbone, Arnaldo, 00167 Roma (IT)
(74) Representative: Emmi, Mario

(57) **Abstract**

The present invention concerns a method for producing at least one baked food product (1), preferably a pizza.

Said method comprises the following steps:
- providing at least one stretched dough (S) of said product (1);
- providing at least one stencil (2) reproducing at least one pattern (M) to be achieved;
-applying said at least one stencil (2) on said stretched dough (S) and/or on said baked food product (1);
- placing at least one food ingredient on said stretched dough (S) and/or on said product (1) in correspondence of the pattern (M) of said stencil (2), in such a way that said pattern (M) is reproduced on the stretched dough (S) and/or on said product (1).

## Description

### Field of the invention

The present invention relates to a method for producing at least one baked food product.

Preferably, baked food product means any food obtained by baking doughs, leavened and unleavened ones, in which basic ingredients may be flour, water, yeast and salt.

Preferably, for the present invention, the baked food product is represented by a pizza.

The present invention has an advantageous application for producing baked food products in the field of the food industry, in contexts where an optimal productive flexibility must be guaranteed, meaning the capacity of producing different baked food products, and a high productivity (meaning the number of baked food products produced in a defined unit of time).

The present invention has an advantageous application also for producing baked food products in the field of restaurants or domestic field, in contexts where a certain flexibility of producible baked food products and a high productivity (above all for the field of restaurants) must be guaranteed.

In addition, the present invention relates to a use of a stencil for producing baked food products.

In addition, the present invention relates to a method for distributing at least one ingredient on a baked food product.

### Brief outline of prior art

As known, in recent years technological development in the bakery food field has been oriented towards the development of devices and/or methods that guarantee high productivity and/or optimal productive flexibility.

These devices and/or methods have been found particularly appreciated by the food industry, given that in this context a high productivity and/or an optimal productive flexibility allow obtaining greater revenues and/or economic marginalities.

For these reasons, in the field of baked food products, projecting and achieving solutions which provide to guarantee a high productivity and/or an optimal productive flexibility are constant, the latter with particular reference to production of special baked food products, i.e., having particular non-standard patterns. The term pattern means any decorative pattern made in correspondence of at least one portion of said baked food product; by way of non-limiting example, said pattern may be a writing, a drawing, etc.

For example, methods are known in which the use of a plurality of automated productive units is provided, in which each unit is dedicated to production of a baked food product with a specific pattern.

Methods are also known in which the use of an automated unit for production of baked food products having different patterns is provided; generally, these methods provide making substantial modifications to the productive unit to change from production of a baked food product with a given pattern to a baked food product with a different pattern.

These methods have different inconveniences.

A first inconvenience is represented by the fact that said methods do not guarantee optimal productive flexibility. This is due to the fact that said methods are configured to produce baked food products with a given pattern, not allowing the possibility of varying patterns for each product, thus making it necessary to have available a respective productive unit for each product with a respective pattern.

A second inconvenience is represented by the fact that said methods do not guarantee a high productivity. This is due to the fact that these methods provide making substantial modifications to the productive unit to change from production of a baked food product with a given pattern to a baked food product with a different pattern, thus requiring a machine downtime characterized by times which impact on the number of baked food products produced in a given unit of time.

A third inconvenience is represented by the limited versatility of said methods, meaning the potential applicability to different productive contexts, given that said methods may be typically applied to structured contexts such as the food industry and not to less structured contexts such as the field of restaurants or the domestic field.

In addition, the following publications US2007/017383, US 2007/160715, US 6242026 and US 2023/397614 are known.

### Summary of the invention

The aim of the present invention is to provide a method for producing baked food products, which guarantees a high productivity, which guarantees an optimal productive flexibility, and which guarantees a high versatility.

In addition, the aim of the present invention is to provide a use of a stencil for producing baked food products, which guarantees a high productivity, which guarantees an optimal productive flexibility, and which guarantees a high versatility.

In addition, the aim of the present invention is also to provide a method for distributing at least one ingredient on a baked food product, which guarantees a high productivity, which guarantees an optimal productive flexibility, and which guarantees a high versatility.

According to the present invention, a method for producing at least one baked food product (1), preferably a pizza, is achieved, as defined in claim 1.

In particular, the method provides applying a stencil (2) which reproduces a pattern (M) on a product under preparation (for example, before being baked) or on the product already baked or anyway ready, and distributing through said stencil one or more ingredients which thus reproduce the pattern (M) on the product under preparation or baked.

For example, in the case of pizza, said stencil may be arranged on the stretched dough in order to distribute one or more ingredients according to said pattern (M).

The stencil, for example, may also be arranged on a baked cake to decorate it according to a pattern.

In all cases, the stencil may be used both during the preparation step of the product before baking it (thereby distributing the ingredients with the stencil before baking) and after baking it thereby distributing the ingredients after baking (raw or baked depending on the cases).

Obviously, more different stencils may be used.

Therefore, more in particular, said method comprises a step of providing at least one stretched dough (S) of said product (1).

According to the method, providing at least one stencil (2) reproducing at least one pattern (M) to be achieved is provided.

Therefore, this method provides applying said at least one stencil (2) on said stretched dough (S) and/or on said baked food product (1) (for example before or after having baked it).

According to this method, it is provided to place at least one food ingredient on said stretched dough (S) and/or on said product (1) in such a way that said pattern (M) of the stencil is reproduced on the stretched dough (S) and/or on said product (1).

This solution resolves all the aforementioned technical inconveniences.

These features derive from the experimental tests made by the Applicant, in which the Applicant tested different alternative solutions, to find the solution which best guarantees a high productivity, which guarantees an optimal productive flexibility, and which guarantees a high versatility.

In particular, providing said at least one stencil (2) configured to reproduce said at least one pattern (M), allows reproducing in a simple way said pattern (M) on the stretched dough (S), for example on the dough in the case of pizza under preparation, and/or on said product (1) (for example on pizza already baked in which an ingredient is added at the end of baking or a cake at the end of baking), by applying said stencil (2) on said stretched dough (S) and/or on said product (1) and placing at least one food ingredient on said stretched dough (S) and/or on said product (1) in correspondence of the pattern (M) of said stencil (2).

This simple reproduction modality of said pattern (M) guarantees a high productivity, given that a simple productive modification is required (that is, changing the stencil), for producing each product (1) with a respective pattern (M), which does not significantly impact on the number of baked food products produced in the unit of time.

In addition, this simple reproduction modality of said pattern (M) guarantees an optimal productive flexibility, given that it allows producing baked food products (1) each having a different pattern (M) and of any type.

In addition, this method configured in this way allows obtaining a high versatility, given that it may be applied both to structured contexts such as the food industry, and to less structured contexts such as the field of restaurants and the domestic field.

According to a further aspect of the invention, the method provides a step of baking said stretched dough (S) until said desired product (1) has been obtained.

According to a further aspect of the invention, said stencil (2) is a flat sheet.

Preferably, the stencil (2) is made of metallic and/or plastic material.

Merely by way of non-limiting example, the stencil (2) is made of polymethylmethacrylate (Plexiglass) for food use or, alternatively, the stencil may be of polycarbonate.

Preferably, said stencil (2) has one or more holes whose shape/s generate at least one part of said pattern (M) .

Preferably, the food ingredient is distributed to fill said one or more holes in such a way that, after removal of said stencil (2), the ingredient conforms said at least one part of said pattern (M).

In particular, said stencil (2) configured in this way allows reproducing in a simple way said at least one pattern (M) on the stretched dough (S) and/or on said product (1), thus contributing to obtaining a high productivity, an optimal productive flexibility and a high versatility.

According to a further aspect of the invention, said stencil (2) is a flat sheet whose at least outer perimeter conforms at least one part of said pattern (M).

Preferably, the food ingredient being arranged at least around said outer perimeter in such a way that, after removal of said stencil (2), the ingredient conforms at least said part of said pattern (M).

In particular, said stencil (2) configured in this way allows reproducing in a simple way said at least one pattern (M) on the stretched dough (S) and/or on said product (1), thus contributing to obtaining a high productivity, an optimal productive flexibility and a high versatility.

According to a further aspect of the invention, before the baking step, the method provides a step of placing at least one further food ingredient on at least one portion of said stretched dough (S).

Preferably, said at least one further food ingredient is placed adjacent to said pattern (M) reproduced through said stencil (2).

This feature allows producing baked food products characterized by further ingredients, possibly configured to form a decoration, placed near said pattern (M).

According to a further aspect of the invention, before the baking step, the method provides a step of removing said stencil (2) from said stretched dough (S).

This is necessary if said stencil (2) is made of thermolabile material, that is not resistant to high temperatures reached inside an oven.

According to a further aspect of the invention, said step of providing said stencil (2) comprises sub-step of digitally processing a digital image reproducing this stencil (2).

In particular, through this digital processing, a conformation (bidimensional or three-dimensional) is obtained in digital format of the stencil (2) to be achieved, thus allowing obtaining an optimal productive flexibility.

According to a further aspect of the invention, the method provides a step of cutting a sheet of material, for example Plexiglass or polycarbonate, starting from this digital image in such a way that said stencil (2) is reproduced.

Therefore, the image may be achieved with a suitable workstation such as a PC or computer in general to then send the image directly to a simple laser machine which can cut the sheet.

In this way, also a business like a pizza restaurant might be equipped with a suitably programmed PC and a laser cutting machine for cutting in few minutes any shape of sheet and thus being able to decorate according to unlimited combinations their pizzas or baked products also on immediate request from the client which orders the baked food, for example pizza, with a possible decoration (for example an image of a guest of honor's face).

In particular, said cutting step allows to achieve in a simple and precise way said stencil (2) starting from a sheet of material and on the basis of said digital image, thus contributing to obtaining a high productivity, an optimal productive flexibility and a high versatility.

According to a further aspect of the invention, the use of a stencil (2) reproducing a predetermined pattern (M) is provided for achieving said pattern (M) with the ingredient which is distributed on a stretched dough (S) of a baked food product (1) and/or on a baked food product (1), for example a pizza.

This solution resolves all the aforementioned technical inconveniences.

These features derive from the experimental tests made by the Applicant, in which the Applicant tested different alternative solutions, to find the solution which best guarantees a high productivity, which guarantees an optimal productive flexibility, and which guarantees a high versatility.

In particular, the use of said at least one stencil (2) configured to reproduce said at least one pattern (M) allows reproducing in a simple way said pattern (M) on the stretched dough (S) and/or on said product (1), by applying said stencil (2) on said stretched dough (S) and/or on said product (1) and placing at least one food ingredient on said stretched dough (s) and/or on said product (1) in correspondence of the pattern (M) of said stencil (2).

This use guarantees a high productivity, given that a simple productive modification is required (that is, changing the stencil), for producing each product (1) with a respective pattern (M), which does not significantly impact on the number of baked food products produced in the unit of time.

In addition, this use guarantees an optimal productive flexibility, given that it allows producing baked food products (1) each having a different pattern (M) and of any type.

In addition, this use allows obtaining a high versatility, given that it may be applied both to structured contexts such as the food industry, and to less structured contexts such as the field of restaurants and the domestic field.

According to a further aspect of the present invention, the method for distributing at least one ingredient on a baked food product (1), preferably a pizza, comprises a step of providing at least one stencil (2) which reproduces at least one pattern (M) which one aims to achieve.

Preferably, said method comprises applying said stencil (2) on said product (1).

Preferably, said method comprises placing at least one food ingredient in correspondence of the pattern (M) of said stencil (2), in such a way that said pattern (M) is reproduced on the product (1).

This solution solves all the aforementioned technical inconveniences.

These features derive from the experimental tests made by the Applicant, in which the Applicant tested different alternative solutions, to find the solution which best guarantees a high productivity, which guarantees an optimal productive flexibility, and which guarantees a high versatility.

In particular, providing said at least one stencil (2) configured to reproduce said at least one pattern (M), allows reproducing in a simple way said pattern (M) on the stretched dough (S), and/or on said product (1), by applying said stencil (2) on said stretched dough (S) and/or on said product (1) and placing at least one food ingredient on said stretched dough (S) and/or on said product (1) in correspondence of the pattern (M) of said stencil (2).

This method guarantees a high productivity, given that a simple productive modification is required (that is, changing the stencil), for producing each product (1) with a respective pattern (M), which does not significantly impact on the number of baked food products produced in the unit of time.

In addition, this method guarantees an optimal productive flexibility, given that it allows producing baked food products (1) each having a different pattern (M) and of any type.

In addition, this method allows obtaining a high versatility, given that it may be applied both to structured contexts such as the food industry, and to less structured contexts such as the field of restaurants and the domestic field.

According to a further aspect of the invention, said product (1) is a stretched dough (S) before baking it, preferably a dough for pizza.

Preferably, said stencil (2) being applied to the stretched dough (S) before baking it.

According to a further aspect of the invention, said baked food product (1) is a baked food product already baked, for example a pizza.

Preferably, said stencil (2) being applied on said baked food product (1) already baked.

According to a further aspect of the invention, the method provides a step of baking said stretched dough (S) until obtaining said desired product (1).

### Brief description of the drawings

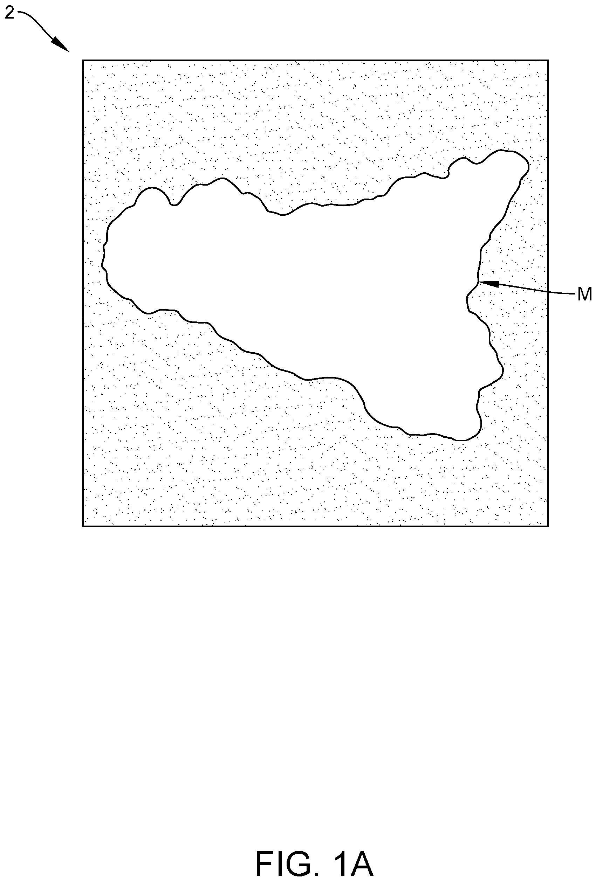

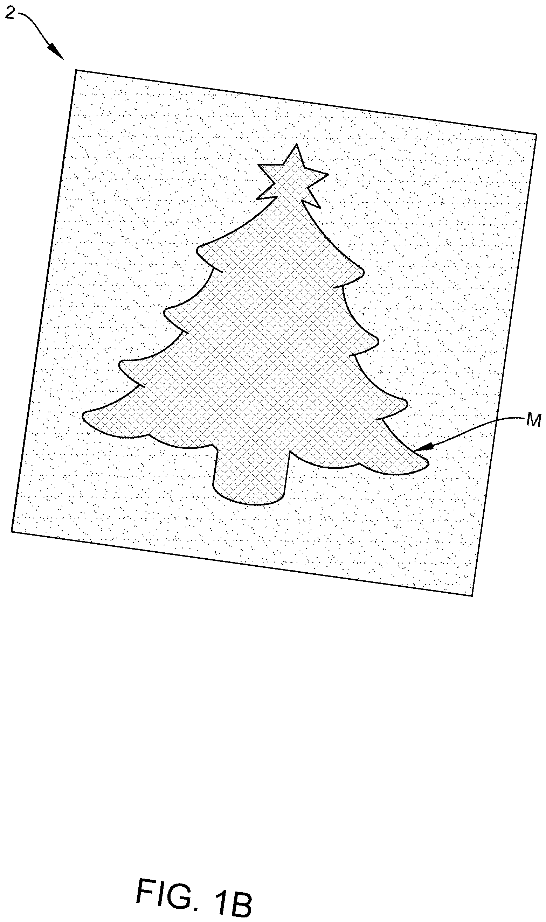

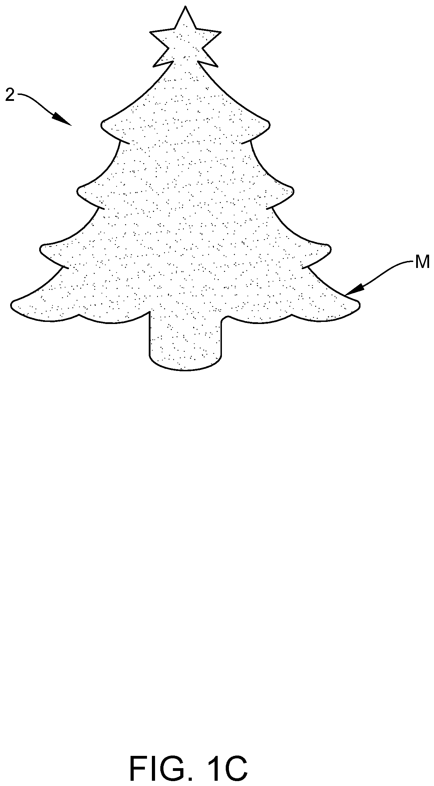

For better understanding the present invention, a preferred embodiment is now described, merely by way of non-limiting example, with reference to the appended drawings, wherein:
each of figures 1A, 1B, 1C shows a view of a stencil which reproduces a specific pattern, according to an embodiment of the invention. In particular, figures 1A e 1B show a plane or sheet cut out internally according to a certain shape in such a way that the ingredient may be placed inside the cut-out shape and therefore reproducing the image; figure 1C shows the inverted case in which the stencil does not have any inner hole and it is itself cut out according to a certain perimeter profile (a Christmas tree in the case of figure 1C) thereby allowing replicating the drawing by applying the ingredient to surround this profile;
figure 2 shows a view of a stencil according to the example of figure 1A placed on a stretched dough, for example of a pizza;
figure 3 shows a view of a stretched dough having the pattern given by the stencil of figure 2 applied, for example having distributed a tomato sauce on it;
figure 4 shows a view of a stretched dough having the same pattern and having further ingredients to complete the pizza, for example before baking it;
figure 5 shows an example completely similar to that of figure 4.

### Description of some preferred embodiments

The object of the present invention is a method for preparing a baked food product by using one or more stencils, each reproducing a certain drawing, in order to apply it/them on the product under preparation or already prepared and through which one or more ingredients may be distributed, in such a way that this/these ingredients are distributed on the product according to the drawing reproduced by the stencil.

Therefore, substantially, it is a sort of stenciling technique applied to the food field obviously with stencils suitable for hygienical/food field.

For example, the method may be validly used in preparation of pizza for distributing one or more ingredients according to a certain drawing, for example before baking it or after having baked it if the ingredients to be distributed according to a drawing pattern must be kept raw.

A further example may be for desserts, such as cakes in which the decoration may be made, according to the description, before or after baking them, depending on the cases, and in particular depending on the ingredient which one wishes to distribute both if it must be kept raw or if it must be baked with the product.

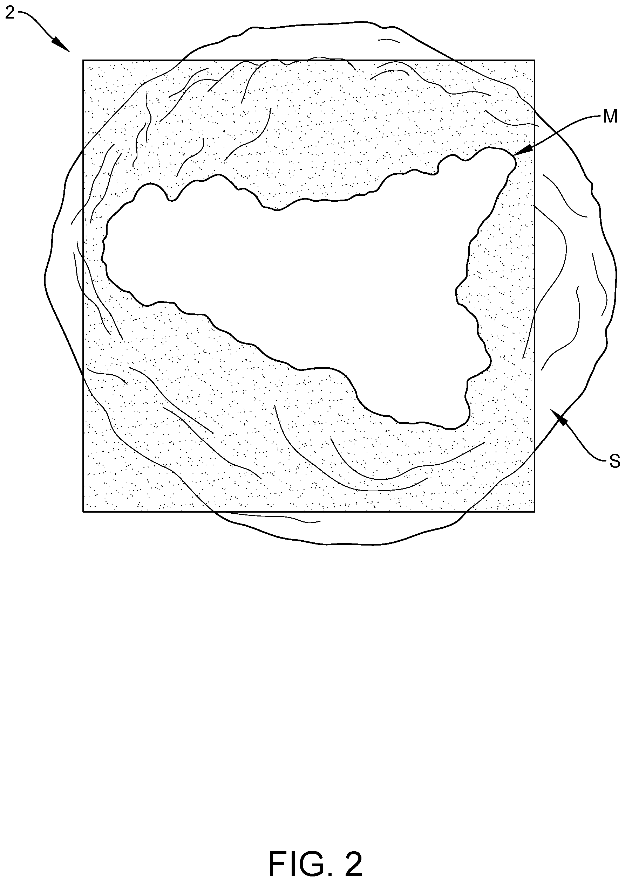

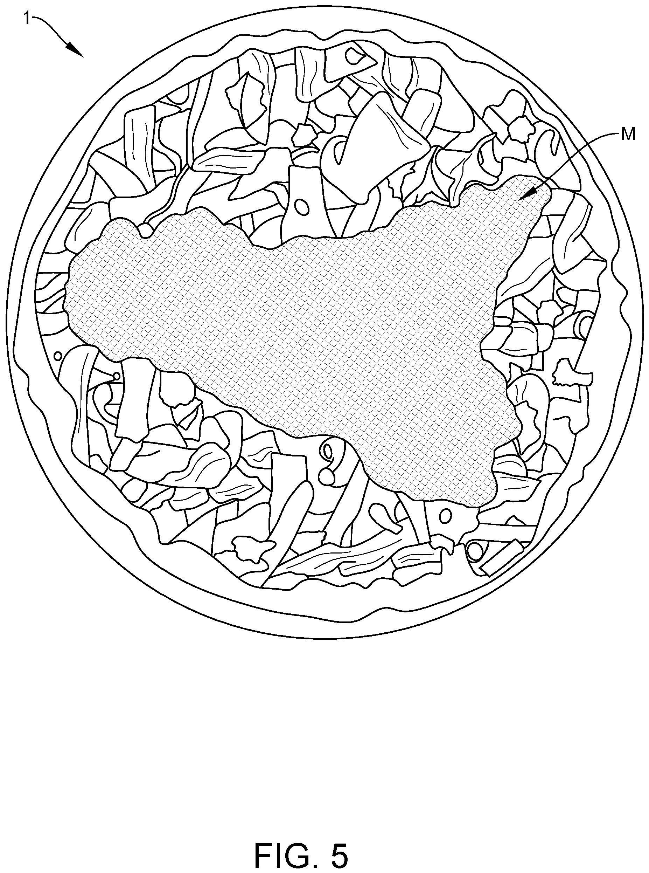

Therefore, by describing in greater detail the invention and referring to figure 2 and figure 5, the method of the present invention allows producing at least one baked food product 1.

This product is preferably a pizza, as shown in figures from 1 to 5, but as mentioned above, it may be extended to any baked product among which desserts, cakes and therefore not only savory product like pizza.

According to a further preferred embodiment, said baked food product 1 may thus be a cake or any confectionery product.

The method provides producing a stretched dough S starting from the dough of the product 1.

In addition, the method provides producing a stencil 2 which reproduces at least one pattern M which one intends to achieve.

This pattern may be any graphical sign or drawing, with the final purpose of achieving a product 1 with a particular decoration, thus obtaining a special product 1. For example, as shown in figures 1A, 1B and 1C, the pattern M may be the conformation of a region (the Sicily region) or a Christmas tree.

In addition, the pattern M of the stencil 2 may be a cavity (a through-hole) or a full shaped body: in the first case it is a "negative" stencil 2 (figure 1A and 1B), in the second case it is a "positive" stencil 2 (figure 1C), as better described below.

In addition, the method provides applying the stencil 2 on the stretched dough S.

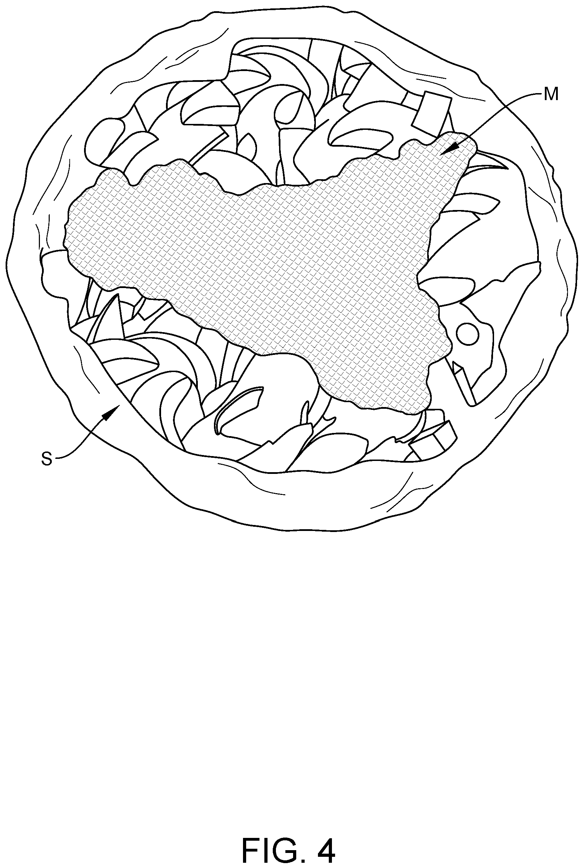

Alternatively or in addition, the stencil 2 may also be applied on the baked food product 1, as shown in figure 4.

In addition, the method provides placing at least one food ingredient on the stretched dough S.

Alternatively or in addition, at least one food product is also placed on the product 1 in correspondence of the pattern M of said stencil 2; in this way, the pattern M is reproduced on the stretched dough S and/or on the product 1.

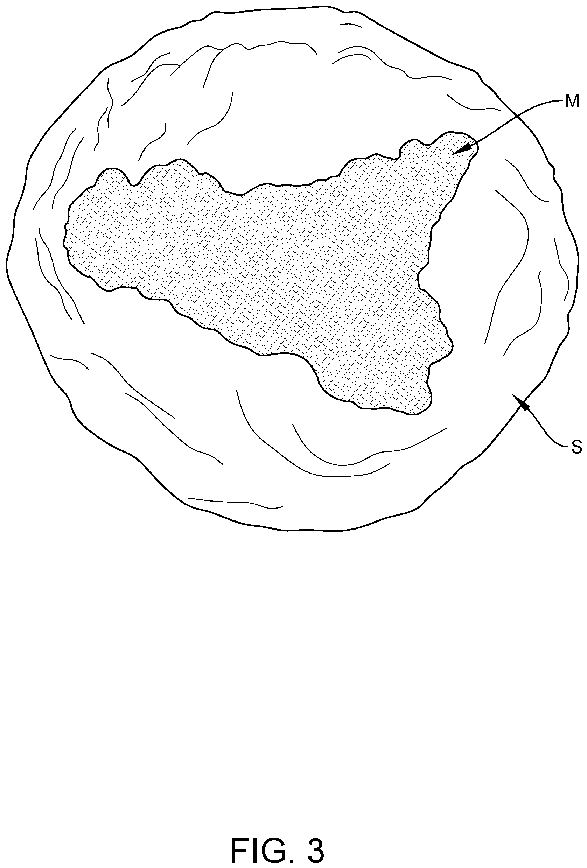

In the event that the stencil 2 is a "negative" stencil, the food ingredient (in figure 3 represented by the tomato of the pizza) will fill the cavity of the stencil 2 thus reproducing the pattern M on the stretched dough S.

In the event that the stencil 2 is a "positive" stencil 2 (that is a full shaped body), the food ingredient will be deposited on the outer perimeter of the stencil 2 thus reproducing the pattern M on the stretched dough S.

In other words, the method object of the present invention allows for the decorated distribution of the ingredients upon preparing "themed" baked food products, preferably "themed" or special pizzas.

Pizzas with "themed" decorations may be made, once the type of pizza to be prepared and the theme to be represented on the pizza have been selected, by preparing a stretched dough S from the usual dough for pizza with the desired shape and sizes (rounded, rectangular, by the meter) and it is decorated as necessary with themed stencils.

In the event that one wishes to make a pizza with tomato, boletus, basil or parsley as ingredients and to decorate it with an image representing the Sicily region (figure 5 shows the pizza once it has been finished), one proceeds with preparing the stencil 2, for example made of material comprising Plexiglass, with the cut-out pattern M (the Sicily region) of the required size.

The stencil 2 may be produced by sending to a printer, for example of the "printer/cutter" type (for example of the laser type), the vectorial image of the Sicily region (as shown in figure 1).

Therefore, a simple laser cutting machine may be used (a machine with small sizes is sufficient) suitable for cutting a Plexiglass or polycarbonate sheet.

Therefore, the drawing is created with a processor (for example a PC) and is sent to the laser machine in such a way that the sheet is immediately cut, thus producing the stencil which reproduces the drawing.

With reference to the non-limiting example of figure 2 and figure 3, the shape of Sicily is cut thereby, as mentioned, obtaining a "negative" stencil (figure 2) constituted by the original sheet in which the laser produced the opening which retraces the outline of the drawing coming from the PC (in this exemplifying case Sicily) and a "positive" stencil which represents the part cut out and removed from the sheet (in this exemplifying case Sicily). Both the "Negative" and "Positive" outlines may be used for decorating the baked food product as well as only one of them, as described below.

Therefore, this processing consists in cutting out the starting material, in such a way that the "negative" stencil 2 and/or the "positive" stencil 2 may be produced, taking into account that most times the corresponding "positive" stencil derives from a "negative" stencil usable in another or in the same project of product preparation. As one may see in figures 1B and 1C, in fact, a "negative" stencil" and the corresponding "positive" stencil of the Christmas tree are obtained with a single session of laser cutting.

The stencil 2 produced in this way may be re-usable, given that it may be produced with washable material.

If one wishes to use stencils 2 for the "themed" distribution of ingredients at the end of baking, materials with a higher melting point (for example, metallic materials such as aluminum) will necessarily have to be used, cut with printers for example of the "laser cutter" type of suitable power, given that Plexiglass has a melting point at 160°C and it could not be used to produce the stencil 2 during baking.

In addition, the production method of the special pizza provides preparing the stretched dough S from the pizza dough of required shape and sizes.

In addition, the method provides applying and centering the stencil 2 on the stretched dough S, as shown in figure 2.

In addition, the method provides distributing tomato into the cavity of the stencil 2 conformed with the pattern M of the Sicily region, for example by using the back of a spoon or a brush (as shown in figure 3).

Once the stencil 2 has been removed, one may possibly proceed with distributing further ingredients, in this case cut boletus to decorate the pizza crusts (as shown in figure 4) .

Preferably, just with the purpose of precisely decorating around the outline of Sicily, one may take advantage of the "positive" stencil to be applied above (also after having decorated it) to precisely decorate the contour.

In addition, the method provides baking the stretched dough S with the addition of food ingredients, thus obtaining a pizza (baked food product 1) as shown in figure 5.

Possibly, at least one "after baking" ingredient may be added, for example parsley or basil.

This possible addition of at least one after baking ingredient may occur by using said stencil 2, for conferring the relative pattern M.

Alternatively, this possible addition of at least one after baking ingredient may occur without using this stencil 2, therefore manually (whether for decoration purposes or not) .

In particular, the stencil 2 is a flat sheet, preferably of Plexiglass or polycarbonate, having one or more holes (through-ones or partially through-ones) whose shape/s generate at least one part of said pattern M.

In all configurations, the pattern M may be anything reproducible such as for example a figure, therefore a drawing in general as well as a written text.

Preferably, in this case, the text is written in a "Stencil" character, which is a character which may be pierced used indeed for the production of molds or stencils perforated or cut by laser on wood for applying paints. The Stencil character represents in an intelligible way the letters of the alphabet which have usually closed spaces inside the main profile and therefore easily workable by laser.

In addition or alternatively, the stencil 2 is a flat sheet, preferably of Plexiglass or polycarbonate, whose outline generates at least one part of said pattern M.

In this way, the food ingredient is distributed to fill said one or more holes or along the perimeter of the outline of the stencil 2 in such a way that, after removal of said stencil 2, the ingredient conforms at least one part of the pattern M.

The stencil 2, when it is made of material not resistant to heat, is removed before baking the stretched dough S added with at least one food ingredient.

The stencil 2, when it is instead made of material resistant to heat (for example, of metallic material such as aluminum), may be removed before baking or after baking the stretched dough S added with at least one food ingredient.

The production method of at least one baked food product 1, the use of a stencil 2 reproducing a predetermined pattern M for achieving this pattern M on a stretched dough S of a baked food product 1 and/or on a baked food product 1 and the method for distributing at least one ingredient on a baked food product 1, as per the description indicated above, allow achieving the aims set forth above, such as allowing a high productivity, an optimal productive flexibility and a high versatility.

Finally, it is clear that modifications and variations may be made to the method for producing at least one baked food product 1, to the use of a stencil 2 reproducing a predetermined pattern M for achieving this pattern M on a stretched dough S of a baked food product 1 and/or on a baked food product 1 and to the method for distributing at least one ingredient on a baked food product 1, described and illustrated here, without thereby departing from the protection scope of the present invention, as defined in the appended claims.

More in particular, according to the method for producing a baked product, the method provides applying the stencil which reproduces a certain drawing on the product (for example on the finished product but that must be decorated or on the product being prepared (before or after baking)) in order to distribute a certain ingredient according to what is reproduced in the stencil. Then the removal of the pattern will follow.

Advantageously, this method may be used for stuffing themed pizza but also desserts such as cakes.

In all configurations described here, as mentioned, with the same computer used for generating the vectorial image, said image may be sent to the laser machine for cutting Plexiglass (PMMA for example with thickness from 1 to 1.3 mm) or polycarbonate (with thickness from 0.3 mm to 1 mm) panels for producing stencils useful to achieve pizza or the baked product.

The sheet for producing the stencil may be of sizes of 40X40 cm. In this way said sheet is suitable for housing stencils usable on baked product intended for plates of standard sizes.

As mentioned, two stencils, a negative one and a positive one, are thus obtained from cutting the sheet.

Merely by way of example we may state that the introduction of a drawing into the PC and laser cutting may require from 15 to 20 minutes, such that it also allows a regular business, such as a pizza restaurant, to be equipped with PC and laser cutting machine to meet also a specific immediate request of decoration if the client already provides the drawing ready to be loaded on the computer.

As already described, the negative stencil is centered on a stretched dough (see figure) and an ingredient is spread, for example tomato or granular mozzarella cheese, and the obtained result is the outline of the Sicily region coloured by the tomato sauce (or coloured by cheese).

Therefore, the outline of the Sicily region obtained on the pizza may be covered with the slightly oiled positive stencil (therefore the decorated shape is covered on the pizza just with the outline of Sicily obtained by cutting the sheet) and another ingredient is placed, for example cut mushrooms and small pieces of basil or parsley to surround the outline of Sicily. In this way, the decoration is very precise.

The outline is removed, and the composition is baked as usual thus obtaining the final desired product. Alternatively, basil or parsley may be added to pizza after baking ("after baking" seasoning).

The innovative method disclosed for producing customized baked products has many advantages with respect to the currently proposed ones.

This method is extremely versatile, given that it may be adapted to a high number of projects. It allows depicting images as well as short words or short phrases like in the event of preparation of a customized pizza not rounded but, rectangular, or by the meter.

The preparation of stencils (M) is simple, quick and cost-effective. If one does not want to or cannot produce the stencils (M) in the preparation place of pizzas or other baked products, one may always resort to a photo reproduction and print centre equipped with incision and laser cutting equipment.

The method may also be applied to baked products such as cakes, as long as cakes have at least one basically flat surface. In this case, by using sugar powder distributed through suitable stencils (M), customizations may be achieved also richer and more complex than the ones which may be obtained on pizzas.

## Claims

1. A method for producing at least one baked food product (1), preferably a pizza, said method comprising the following steps:
- providing at least one stretched dough (S) of said product (1);
- providing at least one stencil (2) reproducing at least one pattern (M) to be achieved;
- applying said at least one stencil (2) on said stretched dough (S) and/or on said baked food product (1) ;
- placing at least one food ingredient on said stretched dough (S) and/or on said product (1) in such a way that said pattern (M) of the stencil is reproduced on the stretched dough (S) and/or on said product (1);
- and wherein said step of providing said stencil (2) comprises a sub-step of digitally processing a digital image reproducing at least the pattern/s (M) of this stencil (2) and a subsequent step of laser cutting of a flat sheet of material starting from this digital image, said laser cutting operation comprising the operation of sending this image to a laser cutting machine which receives the vectorial image and which performs laser cutting of the sheet according to said pattern/s (M), in such a way as to produce a negative stencil (2) constituted by the sheet cut out in such a way that it has one or more openings reproducing said pattern/s and a positive stencil (2) constituted by the part/s cut out and removed from the sheet.

2. The method according to the previous claim, wherein the method provides a step of baking said stretched dough (S) until said product (1) has been obtained.

3. The method, according to one or more of the previous claims, wherein the food ingredient is distributed to fill said one or more holes of the negative stencil in such a way that, after removal of said stencil (2), the ingredient conforms said at least one part of said pattern (M).

4. The method, according to one or more of the previous claims, wherein the food ingredient is arranged at least around said outer perimeter of the positive stencil in such a way that, after removal of said stencil (2), the ingredient conforms at least said part of said pattern (M) .

5. The method, according to one or more of the previous claims, wherein the step of using the negative stencil is provided for reproducing a pattern on the stretched dough and, after removal of the negative stencil, the application of the positive stencil is provided exactly to cover the pattern achieved with the negative stencil on the stretched dough in such a way that one or more ingredients are distributed around the positive stencil.

6. The method, according to one or more of the previous claims, wherein before the baking step a step of removing said positive and/or negative stencil (2) from said stretched dough (S) is provided.

7. The method according to one or more of the previous claims, wherein said stencil is of Plexiglass or polycarbonate.

8. The method, according to one or more of the previous claims, wherein the digital processing of the image occurs through a processor, such as PC, mobile device or computer in general.

9. An assembly for producing at least one baked food product (1), preferably a pizza, the assembly comprising:
- A processor such as a PC, a mobile device or computer in general;
- A laser cutting machine, communicating with the processor and configured to receive a vectorial image reproducing a pattern/s (M) to achieve on the baked product, said machine being further configured to perform laser cutting of a sheet of Plexiglass or polycarbonate in order to produce a stencil (2) which reproduces said pattern/s (M);
- One or more sheets of Plexiglass or polycarbonate;
- An oven for baking the baked product.

10. The assembly, according to claim 9, for achieving the steps of the method according to one or more of the previous claims from 1 to 8.

11. The use of an assembly according to claim 9 or 10, for achieving a pattern (M) with the ingredient which is distributed on a stretched dough (S) of a baked food product (1) and/or on a baked food product (1), for example a pizza.
